# EUROPÄISCHE PATENTSCHRIFT

(11) **EP 2 094 592 B1**
(45) Veröffentlichungstag und Bekanntmachung des Hinweises auf die Patenterteilung: **25.01.2012**
(21) Anmeldenummer: 07816263.3
(22) Anmeldetag: 20.11.2007
(51) Int. Cl.: B65G 47/64, B65G 17/20

(54) **WEICHE**
DIVERTER
AIGUILLAGE

(30) Priorität: 23.11.2006 CH 18882006
(43) Veröffentlichungstag der Anmeldung: 02.09.2009
(73) Patentinhaber: Ferag AG, 8340 Hinwil (CH)
(72) Erfinder: INFANGER, Rudolf, 8340 Hinwil (CH)
(74) Vertreter: Frei Patent Attorneys
(86) Internationale Anmeldenummer: PCT/CH2007/000580
(87) Internationale Veröffentlichungsnummer: WO 2008/061388

(56) Entgegenhaltungen:
- EP-A- 0 611 581
- EP-B1- 0 918 721
- DE-A1- 2 001 330

## Beschreibung

Die Erfindung liegt auf dem Gebiet der Fördertechnik und betrifft eine Weiche zum selektiven Verbinden dreier Führungsmittel zum geführten Bewegen eines Steuerelements oder einer Laufrolle eines Fördermittels gemäss dem Oberbegriff von Anspruch 1, Fördersysteme mit einer solchen Weiche gemäss Anspruch 11 und 12 sowie eine Baugruppe zur Herstellung einer solchen Weiche gemäss Anspruch 14.

Weichen zum selektiven Verbinden von drei oder mehr Führungsmitteln und damit zur Herstellung von Verzweigungen innerhalb eines Streckensystems sind an sich bekannt, vor allem bei schienengeführten Transportmitteln wie beispielsweise der Eisenbahn.

Bekannte Weichen weisen drei oder mehr Führungsmittelabschnitte auf, die zum Anschluss an jeweils ein Führungsmittel ausgebildet oder mit einem solchen einstückig geformt sind. Die Führungsmittelabschnitte definieren zumindest lokal eine Ebene, die im folgenden als Transportebene bezeichnet wird und bei schienengeführten Transportmitteln regelmässig horizontal verläuft. Die Führungsmittelabschnitte haben jeweils mindestens eine Führungsfläche. Bei einer Führungsschiene dienen oft zwei parallel verlaufende, senkrecht auf der Transportebene stehende Begrenzungsflächen als Führungsflächen. Durch ein bewegliches Stellelement wird wahlweise eine im wesentlichen durchgehende Verbindung der einander zugeordneten Führungsflächen des ersten und zweiten bzw. ersten und dritten Führungsmittelabschnitts hergestellt. Bei bekannten Weichen ist das Stellelement, die Weichenzunge, um eine senkrecht zur Transportebene verlaufende Achse verschwenkbar, d.h. bewegt sich in bzw. parallel zur Transportebene, um die gewünschten Verbindungen herzustellen. Auf das Stellelement wird in der Regel nur die senkrecht zur meist horizontal verlaufenden Transportebene wirkende Gewichtskraft ausgeübt, die nicht zu einem unerwünschten Verstellen des Stellelements führt.

Im Bereich der Fördertechnik, insbesondere im Zusammenhang mit der Förderung von einzelnen oder in Gruppen zusammengefassten Gegenständen, z.B. Druckereiprodukten, durch Fördermittel wie Greifer, Taschen, Auflageelemente und dergleichen, wurden bisher vor allem unverzweigte Förderstrecken eingesetzt. Erst in jüngerer Zeit verbreitet sich der Ansatz, Fördermittel statt im Verbund individuell zu bewegen und/oder individuell zu steuern, so dass auch das Bedürfnis nach geeigneten Weichen für solche Fördersysteme zunimmt. Insbesondere besteht das Bedürfnis, neben Verzweigungen in der Förderstrecke auch Verzweigungen in einer Steuerkulisse zu realisieren. Dabei lassen sich bekannte Weichen mit einer in der Transportebene beweglichen Weichenzunge nur unter Inkaufnahme gewisser Nachteile einsetzen.

Denn ein Verstellmechanismus mit Bewegung des Stellelements in der Transportebene ist bei Fördermitteln mit geführten Steuerelementen oder Laufrollen insbesondere dann nachteilig, wenn durch das zu führende Element in Bewegungsrichtung des Stellelements, d.h. quer zur Förderrichtung des Gegenstands, aber parallel zur Transportebene, eine Kraft ausgeübt wird. Denn die Stellung des Stellelements muss auch unter Einfluss dieser Kraft stabil sein, um unerwünschtes Verstellen zu verhindern. Dies ist insbesondere bei den erwähnten Fördermitteln mit einer vertikalen Transportebene der Fall, da die Gewichtskraft bei Verwendung konventioneller Weichen in Verstellrichtung wirken würde. Ausserdem ist die Verwendung konventioneller Weichen bei Steuerkulissen zur Führung von Steuerelementen problematisch, da diese in der Regel in Richtung auf die Führungsfläche vorgespannt sind und damit auf diese unabhängig von der Orientierung der Transportebene in Verstellrichtung eine Kraft ausüben würden. Der Erfindung liegt daher die Aufgabe zugrunde, eine Weiche, ein Fördersystem und eine Baugruppe zum Aufbau einer solchen Weiche zur Verfügung zu stellen, welches die genannten Nachteile vermeidet und einen stabilen Verstellmechanismus aufweist. Aus der DE 2 001 330 ist eine weiche bekannt, die quer zur Transportebene vorbeitet.

Die Aufgabe wird gelöst durch eine Weiche mit den Merkmalen von Anspruch 1, durch Fördersysteme mit den Merkmalen der Ansprüche 10 und 11 sowie durch eine Baugruppe mit den Merkmalen von Anspruch 13. Vorteilhafte Weiterbildungen der Erfindung sind in den abhängigen Ansprüchen, der Beschreibung und den Zeichnungen dargestellt.

Die erfindungsgemässe Weiche ist für den Einsatz in einem Fördersystem mit einer Mehrzahl von Fördermitteln konzipiert. Die Fördermittel, insbesondere Greifer, Taschen, Auflageelemente und dergleichen, haben wenigstens eine Laufrolle und/oder wenigstens ein Steuerelement, die bzw. das zumindest bereichweise durch ein Führungsmittel, insbesondere eine Laufschiene bzw. eine Steuerkulisse, geführt ist. Durch eine erfindungsgemässe Weiche innerhalb des Systems von Laufschienen kann eine räumliche Verzweigung der Förderstrecke realisiert werden. Durch eine erfindungsgemässe Weiche innerhalb der Steuerkulisse können bei gleichbleibender Förderstrecke unterschiedliche Funktionen des Fördermittels realisiert werden, z.B. selektives Öffnen, Schliessen oder Verschwenken eines Greifers. Erfindungsgemäss ist ein Stellmittel mit wenigstens zwei Stellelementen vorhanden, das im wesentlichen senkrecht zur Transportebene bewegbar ist. Das Verstellen im wesentlichen senkrecht zur Transportebene hat den Vorteil, dass das Verstellelement im Prinzip über seine gesamte Ausdehnung in Richtung der Transportebene stabilisiert werden kann, z.B. durch senkrecht zur Transportebene verlaufende Führungsstangen oder Stützflächen. Unter im wesentlichen senkrecht zur Transportebene sind auch solche Bewegungen zu verstehen, die gegenüber der Bewegungskomponente senkrecht zur Transportebene eine als gering anzusehende Bewegungskomponente in der Transportebene aufweisen, z.B. eine Schwenkbewegung aus aus der Transportebene gekippten Lage in die Transportebene hinein. Ausserdem ist hierunter auch der Fall zu fassen, bei dem die Transportebene gekrümmt ist. Bezogen auf die Führungsfläche des Verstellelements, erfolgt die Bewegung des Verstellelements senkrecht zur Flächennormale der Führungsfläche.

Im Gegensatz zur Erfindung ist bei konventionell verschwenkbaren Weichenzungen nur eine Stabilisierung im Bereich der Schwenkachse möglich. Das Verstellelement kann ausserdem massiv statt flächig ausgeführt werden und sich insbesondere in einer Richtung senkrecht zur Transportebene passgenau in den Führungsmittelabschnitt einfügen, wodurch eine zusätzliche Stabilisierung erreicht wird.

Wenn nur ein Stellelement vorhanden ist, sind die Führungsmittelabschnitte so geformt, dass zumindest eine Führungsfläche des ersten Führungsmittelabschnitts auch ohne Stellelement in eine ihr zugeordnete Führungsfläche des zweiten Führungsmittelabschnitts übergeht, jedoch von einer ihr zugeordneten Führungsfläche des dritten Führungsmittelabschnitts unter Bildung einer Lücke beabstandet ist. Das Stellelement ist derart zwischen die einander zugeordneten Führungsflächen des ersten und dritten Führungsmittelabschnitts einbringbar, dass eine zumindest weitgehend ununterbrochene Verbindung zwischen den Führungsflächen des ersten und dritten Führungsmittelabschnitts hergestellt und die durchgehende Führungsfläche des ersten und zweiten Führungsmittelabschnitts blockiert wird (aktive Stellung). Durch eine entsprechend geformte, sich bündig an die Führungsflächen anschliessende Stellelement-Führungsfläche überbrückt das Stellelement die Lücke und lenkt einen entlang des ersten Führungsmittelabschnitts geführten Gegenstand zum dritten Führungsmittelabschnitt ab und umgekehrt. Durch eine Bewegung im wesentlichen senkrecht zur Transportebene geht das Stellelement von der aktiven Stellung in eine inaktive Stellung über, in der es nicht mehr mit dem zu führenden Gegenstand in Kontakt kommt und die Verbindung zwischen dem ersten und zweiten Führungsmittelabschnitts freigibt.

Wenn erfindungsgemäss zwei Stellelemente vorhanden sind, kann sich auch zwischen dem ersten und zweiten Führungsmittelabschnitts eine Lücke befinden. Sie kann mittels des zweiten Stellelements wahlweise überbrückt oder offen gelassen werden.

Es ist im Prinzip möglich, dass die Weiche nur zur Realisierung von Verzweigungen bei einseitig führenden Führungsmitteln eingesetzt wird. Dies ist beispielsweise bei Steuerkulissen mit in einer Richtung vorgespannten Steuerelementen der Fall. Diese Steuerelemente müssen dann nur in dieser Richtung geführt werden, und ein einziges Stellelement ist im Prinzip ausreichend, sofern nur eine Lücke und bereits eine durchgehende Verbindung zwischen dem ersten und zweiten Führungsmittelabschnitt besteht.

Bei zweiseitig führenden Führungsmitteln, z.B. Schienen mit zwei senkrecht auf der Transportebene stehenden Führungsflächen, wird ein Stellmittel mit zwei Stellelementen eingesetzt. Die Stellelemente sind jeweils in der Lage, eine zumindest weitgehend ununterbrochene Verbindung zwischen den beiden Führungsflächen des ersten und zweiten bzw. ersten und dritten Führungsmittelabschnitts herzustellen, sofern diese nicht bereits besteht. Bevorzugt ist ein aktiver oder passiver Wechselantrieb vorhanden, der durch eine gegenläufige Bewegung der Stellelemente sicherstellt, dass immer eines der Stellelemente in der aktiven Stellung ist.

Soll auf mehr als zwei Führungsmittel aufgeteilt oder von diesen zusammengeführt werden, werden entsprechend mehr Stellelemente eingesetzt.

Die Weiche umfasst bevorzugt einen Mechanismus zur Selbstauslösung des Schaltvorgangs. Dies ist insbesondere dann von Interesse, wenn im zweiten und dritten Führungsmittelabschnitt geführte Gegenstände in den ersten Führungsmittelabschnitt zusammengeführt werden sollen. Der Selbstauslösemechanismus funktioniert beispielsweise passiv, indem die Gegenstände auf einen Schalthebel im Führungsmittelabschnitt oder am Stellelement selbst auffahren und dabei die notwendige Schaltkraft erzeugen. Alternativ ist auch das Auslösen eines aktiven Antriebs aufgrund eines Sensorsignals möglich.

Besonders vorteilhaft ist der Einsatz der Weiche im Rahmen eines Fördersystems mit entlang einer Transportstrecke bewegbaren Fördermitteln, insbesondere Greifern, Taschen, Auflageelementen. Mittels der Weiche kann eine verzweigte Förderstrecke aufgebaut werden, um einen Strom von Fördermitteln aufzuteilen, zusammenzuführen oder entlang einem von mehreren alternativen Streckenabschnitten zu leiten. Alternativ oder zusätzlich ist es auch möglich, bei einer lokal unverzweigten Förderstrecke durch eine entsprechend verzweigte Steuerkulisse als Führungsmittel für ein Steuerelement wahlweise einzelne Funktionen des Fördermittelszu aktivieren bzw. zu deaktivieren.

Eine Baugruppe zur Herstellung einer Weiche umfasst wenigstens ein, vorzugsweise zwei Stellelemente sowie einen Antrieb zur Bewegung des Stellelements und kann mit bestehenden Führungsmittelabschnitten kombiniert werden, um eine erfindungsgemässe Weiche aufzubauen. Das wenigstens eine Stellelement hat eine Führungsfläche, die durch den Antrieb senkrecht zu ihrer Flächennormale bewegbar ist. Diese Richtung entspricht im eingebauten Zustand einer Bewegung im wesentlichen senkrecht zur Transportebene.

Beispiele der Erfindung sind in den Zeichnungen dargestellt. Es zeigen rein schematisch:
- Fig. 1a+b: eine Prinzipskizze einer nicht erfindungsgemässen Weiche mit einseitig führenden Führungsmitteln und einem Stellelement in zwei verschiedenen Stellungen in einer Ansicht auf die Transportebene;
- Fig. 1c+d: die Weiche aus Fig. 1a+b in einer Ansicht parallel zur Transportebene;
- Fig. 2a+b: eine Prinzipskizze einer erfindungsgemässen Weiche mit einseitig führenden Führungsmitteln und zwei Stellelementen in zwei verschiedenen Stellungen;
- Fig. 3: eine Prinzipskizze einer erfindungsgemässen Weiche mit zweiseitig führenden Führungsmitteln und zwei Stellelementen;
- Fig. 4a-d: mögliche Profilformen für die Führungsmittelabschnitte;
- Fig. 5+6: dreidimensionale Darstellungen einer erfindungsgemässen Weiche;
- Fig. 7: ein Stellmittel mit zwei Stellelementen in dreidimensionaler Darstellung mit einem aktiven Antrieb für die Stellelemente;
- Fig. 8: die Stellelemente aus Fig. 7 in einer Ansicht auf die Transportebene;

- Fig. 9: ein Stellmittel mit zwei Stellelementen in dreidimensionaler Darstellung mit einem passiven Umschaltmechanismus für die Stellelemente;
- Fig. 10: ein Fördersystem mit einer verzweigten Förderstrecke, die eine erfindungsgemässe Weiche aufweist;
- Fig. 11a+b: ein Fördersystem mit einer unverzweigten Förderstrecke und einer schaltbaren Steuerkulisse, die eine erfindungsgemässe Weiche aufweist.

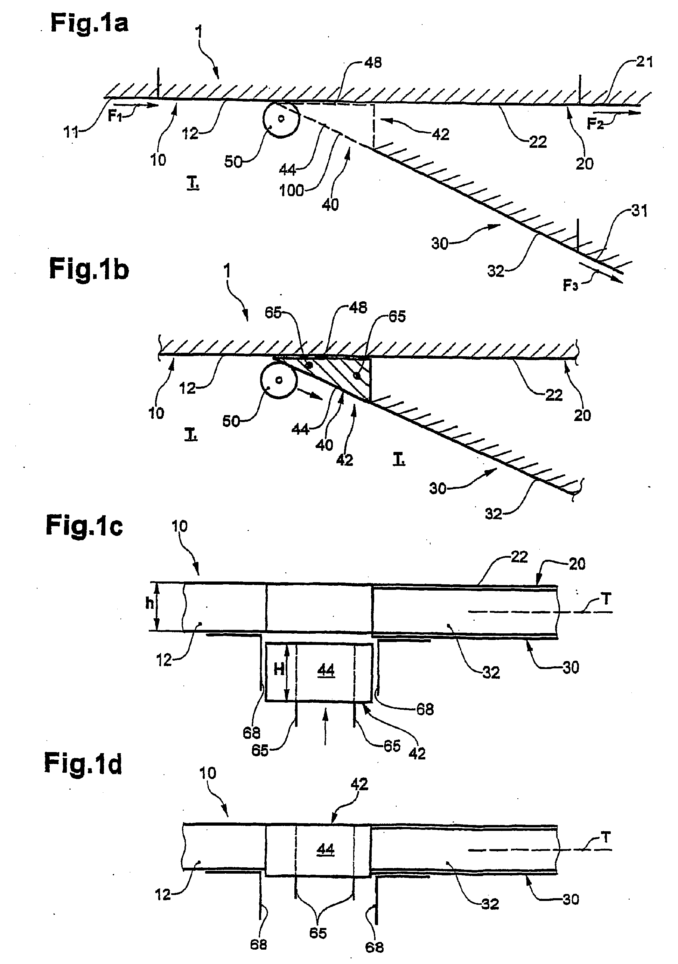

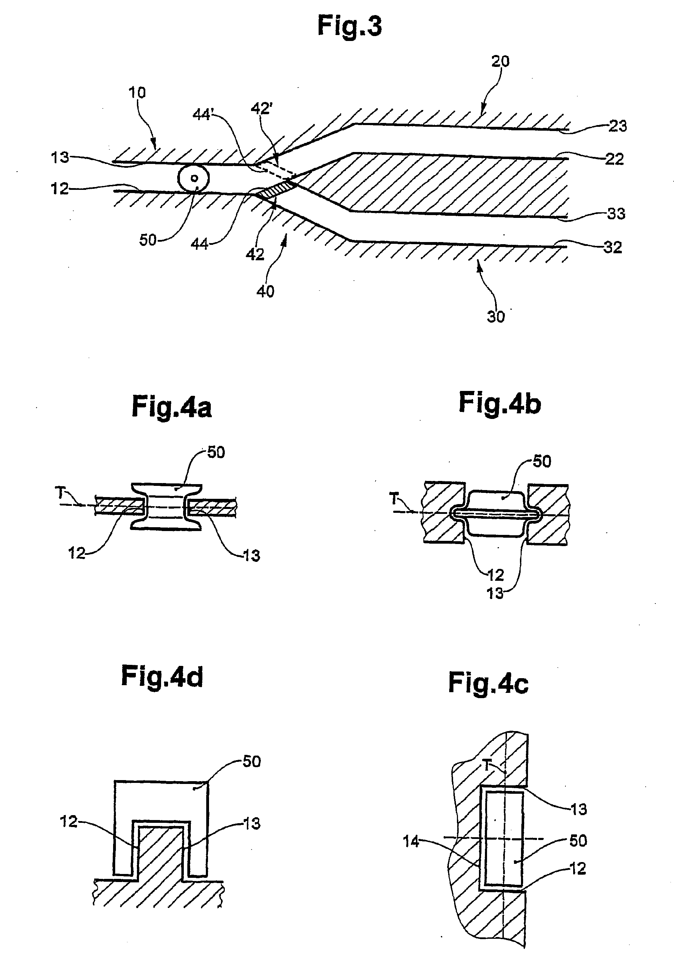

Die in Fig. 1a-d gezeigte Weiche 1 umfasst drei Führungsmittelabschnitte 10, 20, 30, die jeweils mit einem ersten, zweiten bzw. dritten Führungsmittel 11, 21, 31 verbunden sind. Die Führungsmittelabschnitte 10, 20, 30 haben jeweils nur eine Führungsfläche 12, 22, 32, entlang derer ein Gegenstand 50, z.B. eine Laufrolle oder ein Steuerelement, bewegt werden kann. Es handelt sich beispielsweise um eine Steuerkulisse mit einem gegen die Führungsflächen 12, 22, 32 vorgespannten Steuerelement in Form einer Steuerrolle. Die drei Führungsmittelabschnitte 10, 20, 30 definieren eine Transportebene T für den Gegenstand 50, die hier der Darstellungsebene bzw. einer dazu parallelen Ebene entspricht. In der Praxis können die Führungsmittelabschnitte 10, 20, 30 aus der Darstellungsebene heraus gebogen sein. Der Einfachheit halber wird im Folgenden davon ausgegangen, dass sich auch eine solche dreidimensionale Transportfläche lokal durch eine Ebene annähern lässt. Die Führungsflächen 12, 22, 32 sind in der Regel senkrecht zur Transportebene T orientiert. Es ist nicht notwendig, dass die Führungsflächen 12, 22, 32 eben sind (siehe Fig. 4a+b).

Ein erster und ein zweiter Führungsmittelabschnitt 10, 20 und die entsprechenden Führungsflächen 12, 22 gehen unmittelbar ineinander über. Zwischen dem ersten und einem dritten Führungsmittelabschnitt 10, 30 ist hingegen in Förderrichtung F1 gesehen eine Lücke 100. Ein Stellmittel 40 umfasst ein Stellelement 42, das mittels eines geeigneten Antriebs (hier nicht dargestellt) in einer Richtung senkrecht zur Transportebene T derart in diese Lücke 100 eingebracht werden kann, dass eine weitgehend ununterbrochene, kontinuierliche Verbindung zwischen dem ersten und dem dritten Führungsmittelabschnitt 10, 30 hergestellt wird. Es weist dazu eine als Stellelement-Führungsfläche 44 wirkende Seitenwand auf, die die Führungsflächen 12, 32 des ersten und dritten Führungsmittelabschnitts 10, 30 miteinander verbindet und dabei die ununterbrochene Verbindung zwischen dem ersten und dem zweiten Führungsmittelabschnitt 10, 20 blockiert.

Fig. 1a zeigt eine gestrichelt dargestellte erste Stellung des Stellmittels 40, in der sich das Stellelement 42 so weit ober- oder unterhalb der Transportebene T befindet, dass der Gegenstand 50 unter- bzw. oberhalb des Stellelements 42 entlang der Führungsflächen 12, 22 des ersten Führungsmittelabschnitts 10 in eine erste Förderrichtung F1 und übergangslos entlang des zweiten Führungsmittelabschnitts 10, 20 in eine zweite Förderrichtung F2 zum zweiten Führungsmittel 21 bewegt wird, ohne in Kontakt mit dem Stellelement 42 zu kommen. Diese Stellung entspricht der Seitenansicht Fig. 1c. Fig. 1b zeigt eine zweite Stellung des Stellmittels 40, in der sich das Stellelement 42 in der Transportebene T befindet (schraffiert dargestellt), so dass der Gegenstand 50 entlang der Führungsflächen 12, 32 des ersten und dritten Führungsmittelabschnitts 10, 30 sowie entlang der Stellelement-Führungsfläche 44 in eine dritte Förderrichtung F3 zum dritten Führungsmittel 31 bewegt wird.

Vorzugsweise hat die Stellelement-Führungsfläche 44 senkrecht zur Transportebene T eine Höhe H, die gleich oder grösser ist als die Höhe h der Führungsflächen 12, 22, 32. Das Stellelement 42 führt beim Schalten bevorzugt mindestens einen Hub entsprechend der Höhe h der Führungsflächen 12, 22, 32 aus.

In der dargestellten Betriebsart dient die Weiche 1 zum Ablenken eines Gegenstands 50 aus einer Richtung F1 wahlweise in eine Richtung F2 oder F3. Ein Strom aus mehreren Gegenständen 50 kann auch auf den zweiten und dritten Führungsmittelabschnitt 20, 30 aufgeteilt werden. Die Weiche kann des weiteren mit den umgekehrten Förderrichtungen betrieben werden. In diesem Fall werden vom zweiten bzw. dritten Führungsmittel 21, 31 kommende Gegenstände 50 zu einem gemeinsamen Förderstrom auf das Führungsmittel 11 zusammengeführt.

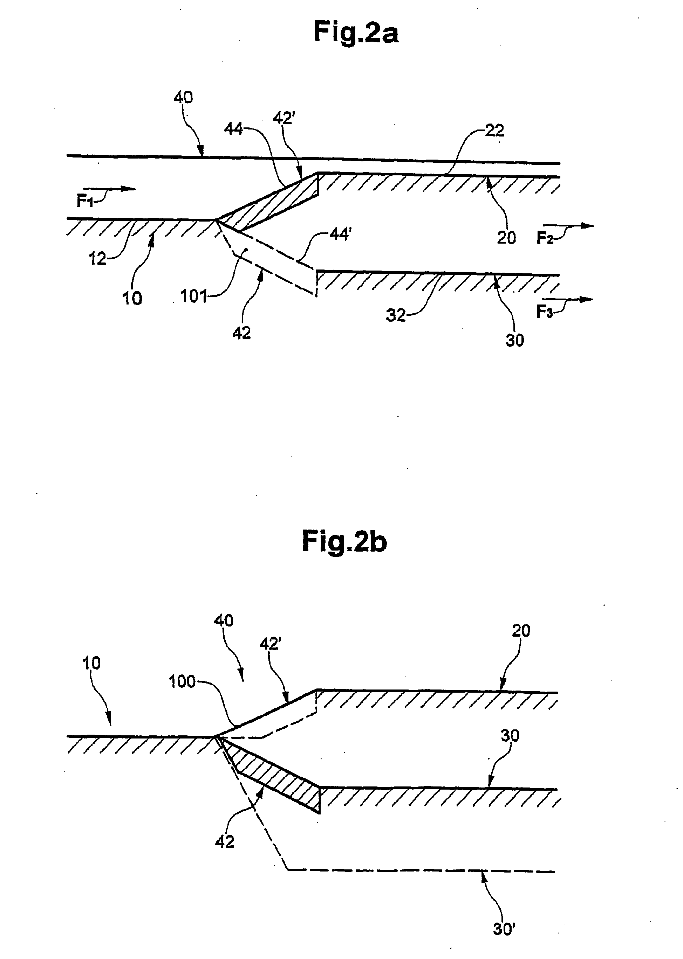

Das Verstellelement 42 hat neben der Verstellelement-Führungsfläche 44 eine weitere Seitenwand 48, die sich im aktiven Zustand (Fig. 1b) an der Führungsfläche 12, 22 des ersten bzw. zweiten Führungsmittelabschnitts 10, 20 abstützt. Durch diese starre Konstruktion des Verstellelements 42 wird eine zusätzliche Stabilisierung hinsichtlich auf die Führungsfläche 44 wirkender Kräfte erreicht. Im Prinzip sind jedoch beliebige Formen des Verstellelements 42 möglich, sofern seine Führungsfläche 44 die Lücke schliesst (schematisch in Fig. 2a+b, Fig.3 gezeigt).

In Fig. 1b-d angedeutet sind zwei senkrecht zur Transportebene verlaufende Führungsstangen 65 sowie seitliche Führungselemente 68 (Fig. 1c+d), die ebenfalls zur Stabilisierung des Verstellelements 42 dienen.

Fig. 2a+b zeigen eine Abwandlung der Weiche aus Fig. 1a+b mit einem Stellmittel 40, das erfindungsgemäss zwei Stellelemente 42, 42' umfasst. Die Führungsfläche 12 des ersten Führungsmittelabschnitts 10 ist in Förderrichtung F1 von den Führungsflächen 22, 32 des zweiten und des dritten Führungsmittels 20, 30 beabstandet, wobei die Lücke 100, 101 jeweils durch eines der Stellelemente 42, 42' überbrückt werden kann. Gestrichelt ist wieder jeweils die inaktive Stellung, in der das Stellelement 42, 42' nicht mit einem geführten Gegenstand in Berührung kommt bzw. diesen nicht ablenkt, gezeigt, während mit durchgezogenen Linien die aktive Stellung dargestellt ist, in der das Stellelement 42, 42' den geführten Gegenstand mittels der Führungsflächen 44, 44' ablenkt. Die beiden Stellelemente 42, 42` sind vorzugsweise gegenläufig bewegbar. Die Bewegbarkeit des unteren Stellelements 42 ist bei einer einseitigen Führung vor allem dann von Interesse, wenn eine Verzweigung auf drei oder mehr Abschnitte hergestellt werden soll (ein weiterer Führungsmittelabschnitt 30' ist in Fig. 2b gestrichelt angedeutet).

Fig. 3 zeigt ein Beispiel einer Weiche, deren Führungsmittelabschnitte 10, 20, 30 jeweils zwei Führungsflächen 12/13, 22/23, 32/33 aufweisen, die zur beidseitigen Führung eines Gegenstands 50 dienen. Unter "beidseitiger Führung" wird auch der Fall verstanden, bei dem ein Gegenstand mal von der einen und mal von der anderen Führungsfläche geführt wird. Insofern ist auch eine blosse Begrenzungsfläche eine Führungsfläche im Sinne der Erfindung.

Die in der Darstellung obere Führungsfläche 13 des ersten Führungsmittelabschnitts 10 geht in die obere Führungsfläche 23 des zweiten Führungsmittelabschnitts 20 über, während zwischen den jeweiligen unteren Führungsflächen 12, 22 eine Lücke besteht. Entsprechend geht die untere Führungsfläche 12 des ersten Führungsmittelabschnitts 10 in die untere Führungsfläche 32 des dritten Führungsmittelabschnitts 30 über. Auch hier besteht zwischen den entsprechenden oberen Führungsflächen 13, 33 eine Lücke. Durch ein erstes bzw. zweites Verstellelement 42, 42' mit einer absatzlos an die Führungsflächen anschliessbaren Verstellelement-Führungsfläche 44bzw. 44' kann wahlweise die obere oder die untere Lücke geschlossen werden. Die Verstellelemente 42, 42' sind wie in den obigen Beispielen senkrecht zur Transportebene (Darstellungsebene) beweglich. Bevorzugt ist durch einen Wechselantrieb sichergestellt, dass sich immer genau ein Verstellelement 42, 42` in der aktiven Stellung befindet.

In Fig. 4a-d sind mögliche Profilformen für die Führungsmittelabschnitte 10, 20, 30 mit beidseitiger Führung gezeigt. Fig. 4a zeigt ein schlitzförmiges Profil mit zwei zueinander parallelen Führungsflächen 12, 13. Fig. 4b zeigt ein ähnliches Profil wie Fig. 4a, jedoch mit einer Einkerbung in der Führungsfläche. Fig. 4c zeigt ein kastenförmiges Profil mit zwei zueinander parallelen Führungsflächen 12, 13 und einer in bzw. parallel zur hier vertikalen Transportebene T liegenden Bodenfläche 14. Fig. 4d zeigt ein zu Fig. 4c inverses Profil.

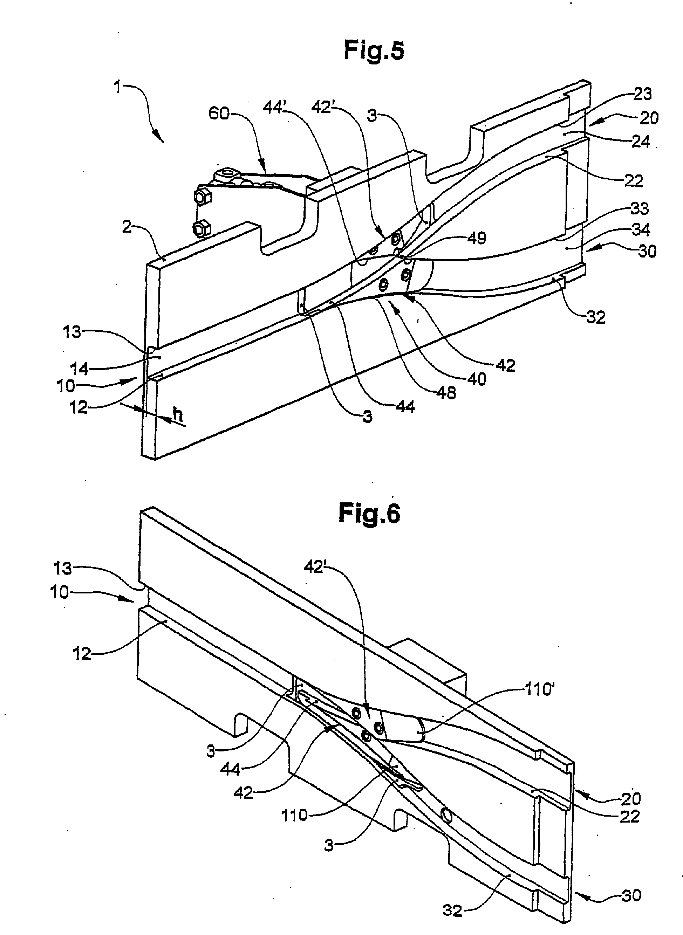

Fig. 5 und 6 zeigen eine Weiche 1 mit dem gleichen grundsätzlichen Aufbau wie in Fig. 3, d.h. mit beidseitiger Führung in den Führungsmittelabschnitten 10, 20, 30, in zwei verschiedenen Schaltstellungen und aus zwei verschiedenen Perspektiven. In Fig. 5 ist durch das Verstellmittel 40 eine hinsichtlich der Führungsflächen 12/13, 22/23, 32/33 kontinuierliche Verbindung zwischen dem ersten und den zweiten Führungsmittelabschnitt 10, 20 hergestellt. Fig. 6 zeigt den umgekehrten Fall mit einer kontinuierlichen Verbindung zwischen dem ersten und dritten Führungsmittelabschnitt 10, 30.

Die Führungsmittelabschnitte 10, 20, 30 sind mit einem rechteckförmigen, Fig. 4c entsprechenden Profil in einen plattenförmigen Grundkörper 2 eingekerbt. Der Grundkörper 2 hat im Bereich der Verzweigung der Führungsmittelabschnitte 10, 20, 30 eine Aussparung 3 in den Bodenflächen 14, 24, 34 sowie teilweise in den vom Verzweigungsbereich der Weiche gesehen radial aussen liegenden Führungsflächen 23, 32. Durch diese Aussparung 3 können die Verstellelemente 42, 42' eines an der Rückseite des Grundkörpers 2 montierten Verstellmittels 40 wenigstens mit ihren Führungsflächen 44, 44' in die Führungsmittelabschnitte 10, 20, 30 hineinragen.

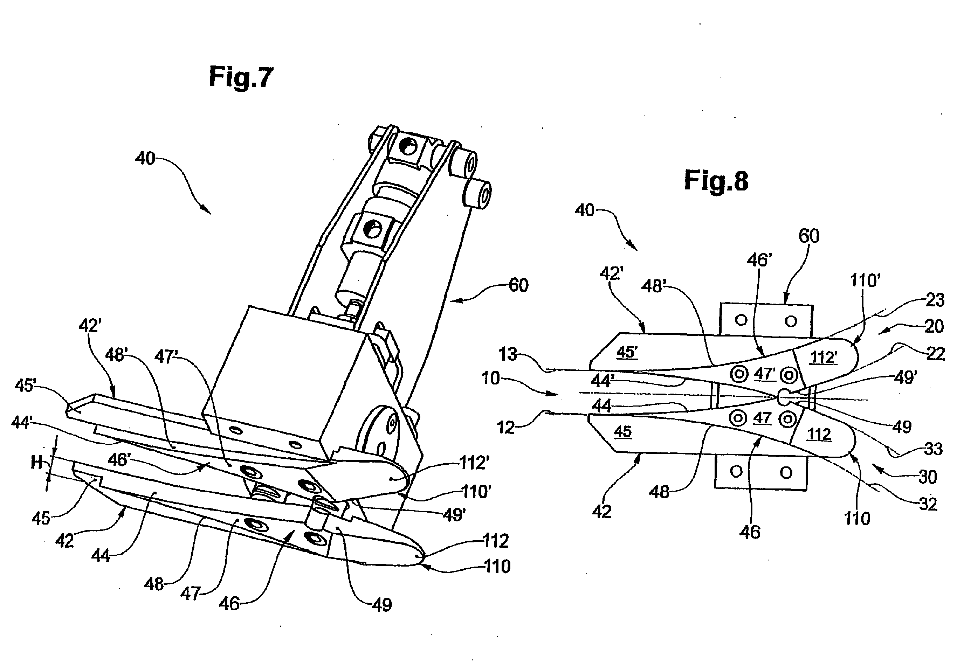

Das in den Fig. 7 und 8 näher dargestellte Verstellmittel 40 umfasst zwei im wesentlichen parallel zueinander angeordnete, zueinander spiegelsymmetrische längliche Verstellelemente 42, 42' sowie einen Antrieb 60, mit dem diese senkrecht zum Grundkörper 2 versetzt werden können. Der Antrieb 60 umfasst beispielsweise einen Linearmotor, der die z.B. mechanisch gekoppelten Verstellelemente 42, 42' gegenläufig bewegt. Alternativ kann für jedes Verstellelement 42, 42' ein Linearmotor vorhanden sein, wobei eine Kopplung nicht notwendig ist.

Die Verstellelemente 42, 42' bestehen aus einem in der Aufsicht auf die Transportebene drei- bis viereckförmigen Grundelement 46, 46` mit einer senkrecht zur Transportebene konstanten Höhe H. Die zum jeweils anderen Verstellelement 42, 42' orientierten innen liegenden Seitenflächen dienen als Verstellelement-Führungsflächen 44, 44' und fluchten in der aktiven Stellung mit den zu verbindenden Führungsflächen der Führungsmittelabschnitte (siehe z.B. Flächen 12, 44 und 22 in Fig. 5). Die Verstellelement-Führungsflächen 44, 44' schliessen mit weiteren Seitenflächen 48, 48' einen spitzen Winkel ein. Diese weiteren Seitenflächen 48, 48' verlaufen in der aktiven Stellung parallel zu den vom Verzweigungsbereich der Weiche gesehen radial aussen liegenden Führungsflächen 23, 32 (siehe Fig. 8). Hierdurch wird das Verstellelement 42, 42' senkrecht zur Transportebene geführt und gegen Querbewegungen stabilisiert. Durch den spitzen Winkel von ca. 5-30° wird in der aktiven Stellung ein sanfter Übergang von den Führungsflächen 12, 13 des ersten Führungsmittelabschnitts 10 auf die jeweilige Verstellelement-Führungsfläche 44, 44' realisiert.

Eine Frontfläche 47, 47' des Grundelements 46, 46' ist eben und liegt im inaktiven Zustand in der Ebene der Bodenflächen 14, 24, 34 oder diesen gegenüber rückwärts versetzt. Im aktiven Zustand befindet sie sich auf demselben Niveau wie die Frontfläche des Grundkörpers 2.

An die Verstellelement-Führungsflächen 44, 44' schliesst sich noch eine weitere Seitenwand 49, 49' an, die in der aktiven Stellung parallel zu den vom Verzweigungsbereich der Weiche gesehen radial innen liegenden Führungsflächen 22, 33 (siehe Fig. 8) verläuft und ebenfalls Stützfunktion hat.

Die Seitenwände 48, 48' gehen in parallel zur Transportebene verlaufende Ränder 45, 45'über. Diese haben hier im wesentlichen dreieckförmige Grundform und eine konstante Höhe, wobei die Grundform auch anders sein kann. Die Ränder 45, 45' befinden sich sowohl in der inaktiven als auch in der aktiven Stellung des entsprechenden Verstellelements 42, 42` hinter dem Grundkörper 2 und dienen dazu, das Verstellelement in der aktiven Stellung flächig an der Rückseite des Grundkörpers 2 abzustützen.

In Fig. 8 ist in einer Aufsicht auf die Transportebene dargestellt, dass die Seitenwände wenigstens des Grundelements 46, 46' mit den Führungsflächen der Führungsmittelabschnitte 10, 20, 30 fluchten. Die jeweils nach Innen orientierten Seitenwände 44, 44' dienen als Verstellelement-Führungsflächen und fluchten in der aktiven Stellung mit den zu verbindenden Führungsflächen der Führungsmittelabschnitte (siehe z.B. Flächen 12, 44 und 22 in Fig. 5). Die jeweils nach Aussen orientierten Seitenwände 48, 48' haben denselben Verlauf wie die jeweils aussenliegenden Führungsflächen 13/23, 12/22 und stützen sich im aktiven Zustand an diesen ab. Eine weitere Seitenfläche 49, 49' verläuft parallel zur innenliegenden Führungsfläche 22, 33 des zweiten bzw. dritten Führungsmittelabschnitts 20, 30 und stützt sich im aktiven Zustand ebenfalls an dieser ab.

An das Grundelement 46, 46'ist eine Rampe 110, 110' mit einer von der Höhe H schräg abfallenden Rampenfläche 112, 112' ausgebildet. Die Rampe 110, 110' ist im aktiven Zustand im zweiten bzw. dritten Führungsmittelabschnitt 20, 30 angeordnet. Sie dient zum Selbstauslösen eines Wechsels von der aktiven in die inaktive Stellung durch einen im zweiten bzw. dritten Führungsmittelabschnitt 20, 30 zum Stellelement 42, 42' hin bewegten Gegenstand. Wird ein solcher gegen die Rampe 110, 110' bewegt, erzeugt er eine Kraftkomponente in Verstellrichtung, d.h. senkrecht zur Transportebene. Der Antrieb 60 ist zur Selbstauslösung vorzugweise so ausgelegt, dass diese Kraftkomponente bereits ausreicht, um den Stellungswechsel in den inaktiven Zustand und gleichzeitig auch die Positiönsänderung des jeweils anderen Stellelements 42, 42' auszulösen.

Insgesamt lässt sich das Verstellelement 42, 42' durch die beschriebene Form des Grundelements 46, 46' passgenau von hinten in die Aussparung 3 einfügen. Auf diese Weise wird das Verstellelement 42, 42' gegen Verkippen und Verschieben stabilisiert. Eine zusätzliche Stabilisierung erfolgt durch den nach Art eines Flansches vom Grundelement 46, 46' abstehenden, in der aktiven Stellung an der Rückseite anliegenden Rand 45, 45'. Die Rampe 47, 47' fügt sich ebenfalls weitgehend passgenau in die Führungsmittelabschnitte 20, 30 ein und bildet einen im wesentlichen kontinuierlichen Übergang zu deren Bodenflächen 24, 34.

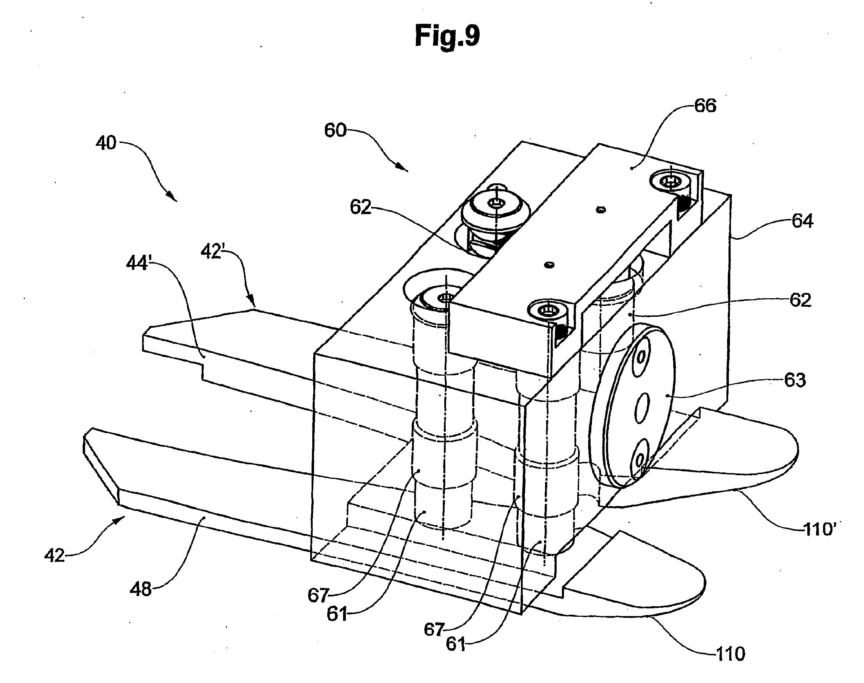

Fig. 9 zeigt schematisch einen rein passiven Antrieb 60 zum Schalten der Stellelemente 42, 42' bei Selbstauslösung, z.B. durch den Gegenstand 50. Die Stellelemente 42, 42' sind mit jeweils zwei Gewindestangen 61, 62 verbunden, die in einem Gehäuse 64 gelagert und durch Führungszylinder 67 geführt sind. Durch die Gewindestangen 61, 62 wird die Verstellrichtung senkrecht zu ihrer Achse stabil vorgegeben. Die Gewindestangen 61, 62 sind durch ein Kopplungselement 63 gekoppelt, z.B. ein Zahnrad oder eine Zahnstange. Dadurch werden die Gewindestangen 61, 62 61, 62 gegenläufig bewegt bzw. wird eine durch Auffahren auf die Rampe verursachte Abwärtsbewegung eines Stangenpaars in eine Aufwärtsbewegung des anderen Stangenpaars übersetzt. Insbesondere bei Selbstauslösung ist eine Fixierung bzw. Stabilisierung der Endpositionen der Gewindestangen 61, 62 bzw. der Stellelemente 42, 42` durch Magnete 66 von Vorteil.

Zum aktiven Schalten der Weiche kann auch bei der Variante aus Fig. 9 ein aktives Antriebselement eingesetzt werden, welches das Kopplungselement 63 oder wenigstens einen der Gewindestangen 61, 62 extern gesteuert antreibt, z.B. ein Penumatikzylinder.

Anstelle einer Kopplung der Stellelemente 42, 42' mit linearen Gewindestangen kann beispielsweise auch eine Kopplung mittels einer Wippe oder eine rein steurungstechnisch vorgenommene Kopplung vorgesehen sein.

Anstelle einer mechanischen Selbstauslösung kann auch eine Selbstauslösung des Schaltvorgangs mittels geeigneter, mit den bewegten Gegenständen zusammenwirkender Sensoren, z.B. einer Lichtschranke oder eines Barcodelesers, deren Ausgangssignal den Antrieb steuert, vorgesehen sein.

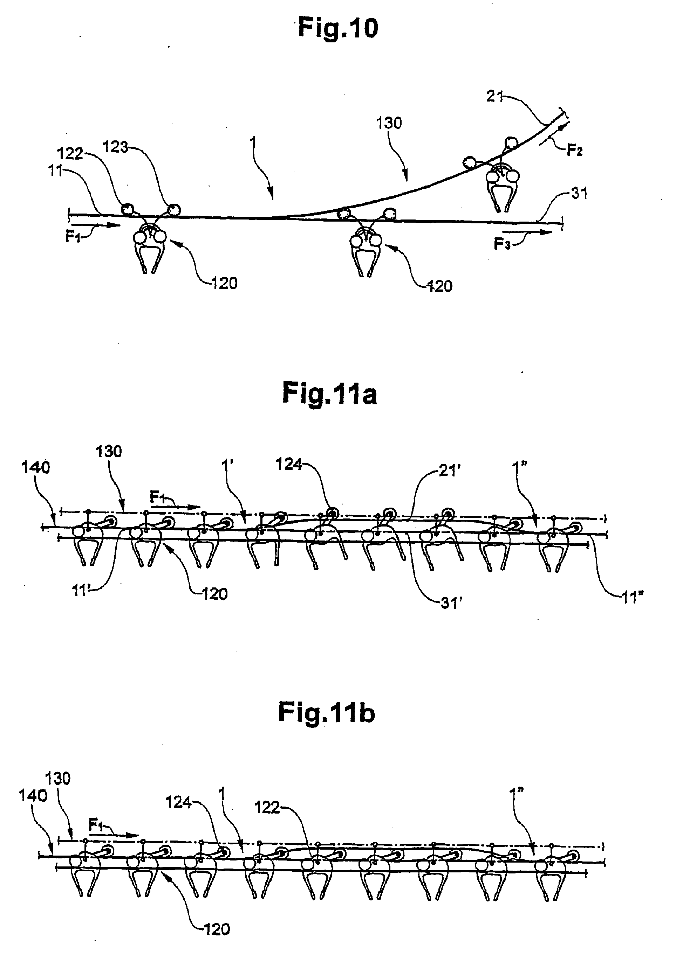

Fig. 10 zeigt ein Beispiel für ein Fördersystem mit einer sich verzweigenden Förderstrecke 130 und mehreren einzelnen Fördermitteln 120 in Form von Greifern. Die Förderstrecke 130 umfasst Führungsmittel 11, 21, 31, die durch eine erfindungsgemässe Weiche 1 verbunden sind. Die Führungsmittel 11, 21, 31 wirken hier mit Laufrollen 122, 123 der Fördermittel 120 zusammen. Durch die Weiche 1 können die ursprünglich in einer ersten Förderrichtung F1 entlang des ersten Führungsmittels 11 bewegten Fördermittel 120 wahlweise in eine Richtung F2 oder F3 zum zweiten bzw. dritten Führungsmittel 21, 31 abgelenkt werden. Das Fördersystem kann auch in umgekehrter Richtung betrieben werden, um von den zweiten bzw. dritten Führungsmitteln 21, 31 kommenden Fördermittel 120 im ersten Führungsmittel 11 zusammenzuführen.

Die Fördermittel 120 können auch zu einem Verbund zusammengeschlossen sein, wobei durch die Weiche 1 der ganze Verbund abgelenkt wird.

Fig. 11a+b zeigen ein Beispiel für ein Fördersystem, bei welchem nicht die Förderstrecke 130 für die Fördermittel 120 selbst, sondern eine Steuerkulisse 140 Verzweigungen aufweist. Die Steuerkulisse 140 umfasst hier Führungsmittel 11', 21', 3', 11 ", die mit Steuerelementen 124 der Fördermittel 120 zusammenwirken und diese führen. Vorliegend sind die Fördermittel 120 exemplarisch als Greifer dargestellt.

Im Beispiel von Fig. 11 a ist die Weiche 1' so geschaltet, dass die Steuerelemente 124 der in der ersten Förderrichtung F1 bewegten Fördermittel 120 von einem ersten Führungsmittel 11' zu einem zweiten Führungsmittel 21' abgelenkt werden. Da das zweite Führungsmittel 21' einen anderen Abstand von der Förderstrecke 130 hat als das erste Führungsmittel 11', verändert sich die Orientierung des Steuerelements 124 relativ zum Fördermittel 120. Vorliegend werden die Greifer dadurch geöffnet Weitere Zusatzfunktionen wie Verschwenken können ebenfalls mit solchen Steuerelementen 124 gesteuert werden.

In Fig. 11b ist die Weiche 1' so geschaltet, dass die Steuerelemente 124 zu einem dritten Führungsmittel 31' geleitet werden, das einen unveränderten Abstand zur Förderstrecke 130 hat und somit die Orientierung der Steuerelemente 124 relativ zu den Fördermitteln 120 nicht ändert. Entsprechend werden die Greifer nicht geöffnet. Eine weitere Weiche 1" überführt das zweite und dritte Führungsmittel 21', 31' in ein weiteres Führungsmittel 11", das wieder den ursprünglichen Abstand von der Förderstrecke 130 hat und - im Falle von Fig. 11a - die ursprüngliche Orientierung des Steuerelements 124 relativ zum Fördermittel 120 wieder herstellt. Die Greifer werden somit geschlossen, sofern die geöffnet waren. Die weitere Weiche 1" ist vorzugsweise selbstauslösend.

Es ist auch möglich, die Steuerelemente 124 aufeinanderfolgender Fördermittel 120 abwechselnd oder in beliebiger Folge über eine der beiden alternativen Führungsstrecken der Steuerkulisse 140 zu leiten, um gezielt bei einzelnen Fördermitteln 120 Zusatzfunktionen zu aktivieren, z.B. Öffnen jedes zweiten Greifers.

Die Fördermittel wie Greifer, Taschen, Auflageelemente können jeweils zwei oder mehr Laufrollen oder Steuerelemente aufweisen, die in einem gemeinsamen System aus Führungsmitteln oder auch in zwei oder mehr voneinander getrennten Systemen aus Führungsmitteln geführt sind. Beispielsweise können die Fördermittel jeweils zwei Laufrollen aufweisen, die quer zur Förderrichtung voneinander beabstandet sind, z.B. zum beidseitigen Abstützen und Aufnehmen der Gewichtskraft des Fördermittels. Die hierbei nötigen Führungsmittel sind in zwei voneinander getrennten Systemen in zwei quer zur Förderrichtung beabstandeten, zueinander parallelen Ebenen angeordnet. Jedes dieser Systeme kann mit erfindungsgemässen Weichen ausgestattet sein.

## Patentansprüche

1. Weiche (1) zum selektiven Verbinden dreier Führungsmittel zum geführten Bewegen wenigstens eines Steuerelements oder wenigstens einer Laufrolle eines Fördermittels, umfassend einen ersten, einen zweiten und einen dritten Führungsmittelabschnitt (10, 20, 30) mit jeweils mindestens einer Führungsfläche (12, 13, 22, 23, 32, 33), die das Steuerelement oder die Laufrolle zu führen imstande ist, sowie ein Stellmittel (40), das wenigstens zwei Stellungen einnehmen kann, wobei zumindest eine Führungsfläche (12, 13) des ersten Führungsmittelabschnitts (10) unter Bildung einer Lücke (100) von einer Führungsfläche (32, 33) des dritten Führungsmittelabschnitts (30) beabstandet ist, **dadurch gekennzeichnet, dass** das Stellmittel (40) zwei Stellelemente (42, 42') umfasst, die senkrecht zur durch die Führungsmittelabschnitte (10, 20, 30) definiertenTransportebene (T) gegenläufig bewegbar sind, wobei das erste Stellelement eine zumindest weitgehend ununterbrochene Verbindung zwischen den Führungsflächen (12, 13, 32, 33) des ersten und dritten Führungsmittelabschnitts (10, 30) herzustellen imstande ist und das zweite Stellelement eine zumindest weitgehend ununterbrochene Verbindung zwischen den Führungsflächen (12, 13, 22, 23) des ersten und des zweiten Führungsmittelabschnitts (10, 20) herzustellen imstande ist.

2. Weiche (1) nach Anspruch 1, **dadurch gekennzeichnet, dass** die wenigstens eine Führungsfläche (12, 13, 22, 23, 32, 33) der Führungsmittelabschnitte (10, 20, 30) im wesentlichen senkrecht zur Transportebene (T) orientiert ist.

3. Weiche (1) nach Anspruch 2, **dadurch gekennzeichnet, dass** das Stellmittel (40) wenigstens ein Stellelement (42, 42') umfasst, das jeweils eine senkrecht zur Transportebene (T) orientierte Stellelement-Führungsfläche (44, 44`) hat, die sich in der ersten Stellung derart zwischen den Führungsflächen (12, 13, 22, 23, 32, 33) der zugeordneten Führungsmittelabschnitte (10, 20, 30) befindet, dass diese vorzugsweise absatzlos ineinander übergehen, und in der zweiten Stellung derart von den Führungsflächen (12, 13, 22, 23, 32, 33) beabstandet ist, dass im Anwendungsfall in den Führungsmittelabschnitten (10, 20, 30) geführte Gegenstände (50) von der Stellelement-Führungsfläche (44, 44') unbeeinflusst sind.

4. Weiche (1) nach einem der vorangegangenen Ansprüche, **dadurch gekennzeichnet, dass** wenigstens eine der Stellungen des Stellelements (42, 42') auf magnetischem Weg stabilisiert ist.

5. Weiche (1) nach einem der vorangegangenen Ansprüche, **gekennzeichnet durch** einen Antrieb (60) zum Bewegen des wenigstens einen Stellelements (42, 42').

6. Weiche (1) nach Anspruch 5, **gekennzeichnet durch** einen aktiven oder passiven Antrieb (60) zum Bewegen der Stellelemente (42, 42') in gegenläufiger Weise.

7. Weiche (1) nach Anspruch 6, **dadurch gekennzeichnet, dass** der Antrieb (60) zwei parallel zueinander angeordnete, durch ein Kopplungselement (63) in gegenläufigem Sinn gekoppelte Gewindestangen (61, 62) umfasst, an deren Ende jeweils ein Stellelement (42, 42') angeordnet ist.

8. Weiche (1) nach einem der Ansprüche 5-7, **dadurch gekennzeichnet, dass** die Führungsmittelabschnitte (10, 20, 30) jeweils zwei im wesentlichen senkrecht zur Transportebene (T) orientierte Führungsflächen (12, 13, 22, 23, 32, 33) aufweisen.

9. Weiche (1) nach einem der vorangegangenen Ansprüche, **dadurch gekennzeichnet, dass** das wenigstens eine Stellelement (42, 42') eine Rampe (47, 47') aufweist, die gegenüber der Transportebene (T) geneigt ist, wobei die Rampe (47, 47') derart mit im zweiten oder dritten Führungsmittelabschnitt (20, 30) geführten Gegenständen (50) zusammenzuwirken imstande ist, dass durch das Auffahren eines solchen Gegenstands (50) auf die Rampe (47, 47') eine Kraftkomponente senkrecht zur Transportebene (T) erzeugt wird, die eine Stellungsänderung des Stellelements (42, 42`) bewirkt.

10. Fördersystem, insbesondere Greiferförderer, mit entlang einer Förderstrecke (130) bewegbaren Fördermitteln (120), insbesondere Greifern, **dadurch gekennzeichnet, dass** die Förderstrecke (130) eine Mehrzahl von Führungsmitteln (11, 21, 31) sowie wenigstens eine Weiche (1) nach einem der vorangegangenen Ansprüche umfasst.

11. Fördersystem, insbesondere Greiferförderer, mit entlang einer Förderstrecke (130) bewegbaren Fördermitteln (120), insbesondere Greifern, und einer wenigstens bereichsweise entlang der Förderstrecke (130) angeordneten Steuerkulisse (140), die zur Steuerung einer Zusatzfunktion des Fördermittels (120) mit einem Steuerelement (124) des Fördermittels (120) zusammenzuwirken imstande ist, **dadurch gekennzeichnet, dass** die Steuerkulisse (140) eine Mehrzahl von Führungsmitteln (11', 21', 31', 11 ") sowie wenigstens eine Weiche (1', 1") nach einem der Ansprüche 1-9 umfasst.

12. Verwendung einer Weiche nach einem der Ansprüche 1-9 zur Herstellung einer Steuerkulisse (140) für ein Fördersystem, insbesondere einen Greifer-, Taschen- oder Auflageförderer.

13. Baugruppe, bestehend aus wenigstens einem Stellelement sowie einem Antrieb zur Bewegung des Stellelements, zur Herstellung einer Weiche nach einem der Ansprüche 1-9.

14. Baugruppe nach Anspruch 13, **dadurch gekennzeichnet, dass** das wenigstens eine Stellelement eine Führungsfläche umfasst, die mittels des Antriebs senkrecht zu ihrer Flächennormale bewegbar ist.

## Claims

1. A diverter (1) for the selective connection of three guides for the guided movement of at least one control element or of at least one runner roller of a conveyor unit, comprising a first, a second and a third guide section (10, 20, 30) with in each case at least one guide surface (12, 13, 22, 23, 32, 33) which is capable of guiding the control element or the runner roller, as well as an actuation member (40) which may assume at least two positions, wherein at least one guide surface (12, 13) of the first guide section (10), whilst forming a gap (100), is distanced to a guide surface (32, 33) of the third guide section (10), **characterised in that** the actuation member (40) comprises at least one actuation element (42, 42') which may be moved perpendicularly to the transport plane (T) defined by the guide sections (10, 20, 30), in the opposite direction, wherein the first actuation element is capable of forming an at least largely uninterrupted connection between the guide surfaces (12, 13, 32, 33) of the first and third guide sections (10, 30), and the second actuation element is capable of forming an at least largely uninterrupted connection between the guide surfaces (12, 13, 22, 23) of the first and the third guide sections (10, 20).

2. Diverter (1) according to claim 1, **characterised in that** the at least one guide surface (12, 13, 22, 23, 32, 33) of the guide sections (10, 20, 30) is oriented essentially perpendicular to the transport plane (T).

3. Diverter (1) according to claim 2, **characterised in that** the actuation member (40) comprises at least one actuation element (42, 42'), which in each case has an actuation element guide surface (44, 44') orientated perpendicularly to the transport plane (T) which, in the first position, is located between the guide surfaces (12, 13, 22, 23, 32, 33) of the assigned guide sections (10, 20, 30) in a manner such that these merge in a preferably shoulderless manner, and in the second position arc distanced to the guide surfaces (12, 13, 22, 23, 32, 33) in a manner such that in the case of application, objects (50) guided in the guide sections (10, 20, 30) are uninfluenced by the actuation element guide surface (44, 44').

4. Diverter (1) according to one of the preceding claims, **characterised in that** at least one of the positions of the actuation element (42, 42') is stabilised in a magnetic manner.

5. Diverter (1) according to one of the preceding claims, **characterised by** a drive (6) for moving the at least one actuation element (42, 42').

6. Diverter (1) according to claim 5, **characterised by** an active or passive drive (60) for moving the actuation elements (42, 42') in a reverse manner.

7. Diverter (1) according to claim 6, **characterised in that** the drive (60) comprises two threaded rods (61, 62) which arc arranged parallel to one another and are coupled in the opposite sense by way of a coupling element (63), on whose end an actuation element (42, 42') is arranged in each case.

8. Diverter (1) according to one of the claims 5 to 7, **characterised in that** the guide sections (10, 20, 30) in each case comprise two guide surfaces (12, 13, 22, 23, 32, 33) which are arranged essentially perpendicularly to the transport plane (T).

9. Diverter (1) according to one of the preceding claims, **characterised in that** the at least one actuation element (42, 42') comprises a ramp (47, 47') which is inclined with respect to the transport plane (T), wherein the ramp (47, 47') is capable of cooperating with objects (50) guided in the second or third guide mean section (20, 30) in such a manner that a force component perpendicular to the transport plane (T) is generated by the moving of such an object (50) onto the ramp (47, 47'), said force component effecting a positional change of the actuation element (42, 42').

10. A conveyor system, in particular a gripper conveyor, with conveyor units (120), in particular grippers, which may be moved along a conveyor path (130) **characterised in that** the conveyor path (130) comprises plurality of guides (11, 21, 31), as well as at least one diverter (1) according to one of the preceding claims.

11. Conveyor system, in particular gripper conveyor, with conveyor units (120), in particular grippers, which may be moved along a conveyor path (130), and with a control cam (140) which is arranged at least in regions along the conveyor path (130) and which is capable of cooperating with a control element (124) of the conveyor unit (120) for the control of an additional function of the conveyor unit (120), **characterised in that** the control cam (140) comprises a plurality of guides (11', 21' 31', 11") as well as at least one diverter (1', 1 ") according to one of the claims 1 to 9.

12. The use of a diverter according to one of the claims 1 to 9 for manufacturing a control cam (140) for a conveyor system, in particular a gripper conveyor, pocket conveyor or support conveyor.

13. An assembly consisting of at least one actuation element as well as a drive for moving the actuation element, for creating a diverter according to one of the claims 1 to 9.

14. Assembly according to claim 13, **characterised in that** the at least one actuation element comprises a guide surface which is movable perpendicularly to its surface normal by way of the drive.

## Revendications

1. Aiguillage (1) pour la liaison sélective de trois moyens de guidage pour le déplacement guidé d'au moins un élément de commande ou d'au moins un rouleau de roulement d'un moyen de convoyage, qui comporte un premier, un second et un troisième tronçon de moyen de guidage (10, 20, 30) avec respectivement au moins une surface de guidage (12, 13, 22, 23, 32, 33) qui est en mesure de guider l'élément de commande ou le rouleau de roulement, ainsi qu'un moyen de réglage (40) qui peut adopter au moins deux positions, dans lequel au moins une surface de guidage (12, 13) du premier tronçon de moyen de guidage (10) est agencée à distance d'une surface de guidage (32, 33) du troisième tronçon de moyen de guidage (30) sous la formation d'un espace (100) d'une surface de guidage (32, 33) du troisième tronçon de moyen de guidage (30), **caractérisé en ce que** le moyen de réglage (40) comporte deux éléments de réglage (42, 42') qui peuvent être déplacés perpendiculairement et l'un à l'encontre de l'autre par rapport au plan de transport (T) défini par les tronçons de moyen de guidage (10, 20, 30) et dans lequel le premier élément de réglage est en mesure d'établir une liaison au moins en grande partie ininterrompue entre les surfaces de guidage (12, 13, 32, 33) du premier et du troisième tronçon de moyen de guidage (10, 30) et dans lequel le second élément de réglage est en mesure d'établir une liaison au moins en grande partie ininterrompue entre les surfaces de guidage (12, 13, 22, 23) du premier et du second tronçon de moyen de guidage (10, 20).

2. Aiguillage (1) selon la revendication 1, **caractérisé en ce que** la au moins une surface de guidage (12, 13, 22, 23, 32, 33) des tronçons de moyen de guidage (10, 20, 30) est orientée essentiellement et perpendiculairement au plan de transport (T).

3. Aiguillage (1) selon la revendication 2, **caractérisé en ce que** le moyen de réglage (40) comporte au moins un élément de réglage (42, 42') qui a respectivement une surface de guidage d'élément de réglage (44, 44') qui est orientée perpendiculairement au plan de transport (T) et qui se trouve dans la première position de telle sorte entre les surfaces de guidage (12, 13, 22, 23, 32, 33) des tronçons de moyen de guidage attribués (10, 20, 30) que ceux-ci se transforment de préférence l'un dans l'autre sans retrait et est agencée dans la seconde position à distance des surfaces de guidage (12, 13, 22, 23, 32, 33) de telle sorte que, dans le cas d'application dans les tronçons de moyen de guidage (10, 20, 30), des objets guidés (50) ne sont pas influencés par la surface de guidage d'élément de réglage (44, 44').

4. Aiguillage (1) selon l'une des revendications précédentes, **caractérisé en ce qu'**au moins une des positions de l'élément de réglage (42, 42') est stabilisée de manière magnétique.

5. Aiguillage (1) selon l'une des revendications précédentes, **caractérisé par** un entraînement (60) afin de déplacer le au moins un élément de réglage (42, 42').

6. Aiguillage (1) selon la revendication 5, **caractérisé par** un entraînement actif ou passif (60) afin de déplacer les éléments de réglage (42, 42') selon une manière contraire.

7. Aiguillage (1) selon la revendication 6, **caractérisé en ce que** l'entraînement (60) comporte deux tiges filetées (61, 62) agencées parallèlement l'une à l'autre et reliées par un élément d'accouplement (63) en sens contraire et sur l'extrémité desquelles un élément de réglage (42, 42') est mis en place.

8. Aiguillage (1) selon l'une des revendications 5 à 7, **caractérisé en ce que** les tronçons de moyen de guidage (10, 20, 30) présentent respectivement deux surfaces de guidage (12, 13, 22, 23, 32, 33) qui sont orientées essentiellement perpendiculairement au plan de transport (T).

9. Aiguillage (1) selon l'une des revendications précédentes, **caractérisé en ce que** le au moins un élément de réglage (42, 42') présente une rampe (47, 47') qui est inclinée par rapport au plan de transport (T) et dans lequel la rampe (47, 47') est en mesure de procéder à une interaction avec des objets guidés (50) dans le second ou dans le troisième tronçon de moyen de guidage (20, 30) de telle sorte que, suite à la course de montée d'un tel objet (50) sur la rampe (47, 47'), une composante de force est générée perpendiculairement par rapport au plan de transport (T) et qui occasionne une modification de la position de l'élément de réglage (42, 42').

10. Système de convoyage, en particulier un convoyeur à préhenseurs, qui comporte des moyens de convoyage (120), en particulier des préhenseurs, qui peuvent être déplacés le long d'une distance de convoyage (130) **caractérisé en ce que** la distance de convoyage (130) comporte une pluralité de moyens de guidage (11, 21, 31) ainsi qu'au moins un aiguillage (1) selon l'une des revendications précédentes.

11. Système de convoyage, en particulier un convoyeur à préhenseurs, qui comporte des moyens de convoyage (120), en particulier des préhenseurs, qui peuvent être déplacés le long d'une distance de convoyage (130), et une coulisse de commande (140) agencée au moins par zone le long de la distance de convoyage (130), laquelle est en mesure de procéder à une interaction avec un élément de commande (124) du moyen de convoyage (120) pour la commande d'une fonction supplémentaire du moyen de convoyage (120), **caractérisé en ce que** la coulisse de commande (140) comporte une pluralité de moyens de guidage (11', 21', 31', 11") ainsi qu'au moins un aiguillage (1', 1") selon l'une des revendications 1 à 9.

12. Utilisation d'un aiguillage selon l'une des revendications 1 à 9, pour la fabrication d'une coulisse de commande (140) pour un système de convoyage, en particulier un convoyeur à préhenseurs, un convoyeur à poches ou un convoyeur à tapis.

13. Groupe constitutif constitué d'au moins un élément de réglage ainsi que d'un entraînement pour le déplacement de l'élément de réglage, pour la fabrication d'un aiguillage selon l'une des revendications 1 à 9.

14. Groupe constitutif selon la revendication 13, **caractérisé en ce que** le au moins un élément de réglage comporte une surface de guidage qui peut être déplacée au moyen de l'entraînement perpendiculairement par rapport à la normale de sa surface.
